# EUROPÄISCHE PATENTSCHRIFT

(11) **EP 4 163 015 B1**
(45) Veröffentlichungstag und Bekanntmachung des Hinweises auf die Patenterteilung: **12.06.2024**
(21) Anmeldenummer: 22000236.4
(22) Anmeldetag: 21.10.2022
(51) Int. Cl.: B05B 3/06, B05B 13/02, B05B 3/00, B23Q 11/00, B05B 1/00, G05D 13/34

(54) **SYSTEM UND VERFAHREN ZUM REINIGEN UND/ODER TROCKNEN VON ZUMINDEST EINEM WERKSTÜCK UND/ODER EINEM WERKZEUG**
SYSTEM AND METHOD FOR CLEANING AND/OR DRYING AT LEAST ONE WORKPIECE AND/OR A TOOL
SYSTÈME ET PROCÉDÉ DE NETTOYAGE ET/OU DE SÉCHAGE D'AU MOINS UNE PIÈCE ET/OU UN OUTIL

(30) Priorität: 06.10.2021 DE 102021004998
(43) Veröffentlichungstag der Anmeldung: 12.04.2023
(73) Patentinhaber: Imm Cleaning Solutions GmbH, 79418 Schliengen (DE)
(72) Erfinder: Kimmig, Markus, 79423 Heitersheim (DE); Adler, Björn, 79241 Ihringen (DE)
(74) Vertreter: Andres, Angelika Maria

(56) Entgegenhaltungen:
- DE-B4-102017 009 773
- DE-C2- 10 049 633
- US-A- 3 319 889

## Beschreibung

Die Erfindung betrifft ein System und ein Verfahren zum Reinigen und/oder Trocknen von zumindest einem Werkstück und/oder einem Werkzeug mittels eines fluiden Mediums. Unter fluidem Medium wird in Verbindung mit der Erfindung ein Gas, z.B. Druckluft, oder ein flüssiges Medium, z.B. eine Reinigungsflüssigkeit oder Wasser, verstanden.

In vielen Fällen werden Werkstücke oder Werkzeuge über spanabhebende Verfahren gefertigt. Um die Werkstücke von losen Spänen oder Partikeln zu reinigen, wird häufig Druckluft eingesetzt, die über eine Arbeitsdüse auf die Werkstücke oder Werkzeuge gerichtet wird. Um eine Relativbewegung zwischen dem Werkstück/dem Werkzeug und der Arbeitsdüse zu erreichen, ist die Arbeitsdüse in einem Endbereich eines drehbar gelagerten Arbeitsarms vorgesehen. Der Arbeitsarm wird durch Ausströmen von Druckluft über eine seitlich am Arbeitsarm angebrachte Antriebsdüse in Rotation versetzt. Um einen möglichst großen Reinigungseffekt zu erzielen, wird die Rotationsgeschwindigkeit des Arbeitsarms auf einen vorgegebenen Wert geregelt.

Aus der DE 100 49 633 C2 ist eine vorteilhafte Vorrichtung zum mechanischen Reinigen von Werkstücken unter Verwendung von Luft- oder Gasströmen bekannt geworden. An einem Anschlussteil zum Anschließen der Vorrichtung an eine die Druckluft oder das Gas führende Druckleitung sind zumindest ein Arbeitsarm und ein Antriebsarm drehbar gelagert. An dem Arbeitsarm ist mindestens eine Arbeitsdüse vorgesehen, aus welcher die Druckluft oder das Gas auf die Werkstücke gerichtet ausströmt. An dem Antriebsarm ist eine Antriebsdüse vorgesehen, aus welcher die Druckluft oder das Gas ausströmt und dabei den Antriebsarm und den mit dem Antriebsarm verbundenen Arbeitsam in Rotation versetzt. Arbeitsarm und Antriebsarm sind entweder radial oder axial zueinander angeordnet. Hierbei sind die Arbeitsarme in einem Arbeitsteil und die Antriebsteile in einem Antriebsteil angeordnet. Arbeitsteil und Antriebsteil sind in einer definierten Ausrichtung miteinander verbunden. Beide Teile, Arbeitsteil und Antriebsteil, rotieren gegenüber dem feststehenden Anschlussteil. Während bei der radialen Ausgestaltung der Arbeitsarm mit der Arbeitsdüse und der Antriebsarm mit der Antriebsdüse kollinear angeordnet sind, sind bei der axialen Ausgestaltung zwei kollinear angeordnete Arbeitsarme mit endseitig angeordneten Arbeitsdüsen und zwei kollinear angeordnete Antriebsarme mit endseitig angeordneten Antriebsdüsen vorgesehen. Weiterhin weist die Vorrichtung einen Fliehkraftregler auf, der die Rotationsgeschwindigkeit des Antriebsarms und damit die Rotationsgeschwindigkeit des mit dem Antriebsarm gekoppelten Arbeitsarms selbsttätig auf einen vorgegebenen, im Wesentlichen konstanten Drehzahlwert regelt.

Aus der DE 10 2017 009 773 A1 ist eine zylinderförmige Rotationsdüse bekannt geworden, die bevorzugt zur Reinigung von klein dimensionierten Werkzeugen oder Werkstücken zum Einsatz kommt. Diese Rotationsdüse weist eine Anschlusskomponente zum Anschließen an eine Druckluftleitung und eine Rotationskomponente auf, wobei die Rotationskomponente drehbar zur Längsachse der Rotationsdüse an der Anschlusskomponente gelagert ist. Zumindest eine Arbeitsdüse ist in dem stirnseitigen, dem zu reinigenden oder zu trocknenden Werkstück oder Werkzeug zugewandten Endbereich der Rotationskomponente angeordnet. Zumindest eine Antriebsdüse ist in der Außenwandung der Rotationskomponente derart angeordnet und/oder die Antriebsdüse ist derart ausgestaltet, dass die Rotationskomponente durch ausströmende Druckluft in Rotation versetzt wird. In der Rotationskomponente ist weiterhin zumindest eine Fliehkraftreglereinheit vorgesehen, die so ausgestaltet ist, dass sie selbsttätig die aus der Antriebsdüse strömende Druckluft so regelt, dass die Drehzahl der Rotationskomponente im Wesentlichen konstant ist.

Treten an den bekannt gewordenen Rotationsdüsen Fehlfunktionen auf, z.B. kommt es zum Stillstand oder schwankt die Drehzahl der Rotationsdüse erheblich, so sind diese Fehlfunktionen nur visuell erkennbar. Da eine visuelle Überprüfung üblicherweise nur temporär beschränkt erfolgen, besteht die Gefahr, dass eine Rotationsdüse ausfällt und ihre Reinigungsaufgabe überhaupt nicht mehr oder nur noch unzulänglich erfüllen kann.

Der Erfindung liegt die Aufgabe zugrunde, ein System und ein Verfahren vorzuschlagen, die eine Überwachung Drehzahl einer oder einer Vielzahl von Rotationsdüsen ermöglicht.

Die Aufgabe wird gelöst durch ein System zum Reinigen und/oder Trocknen von zumindest einem Werkstück und/oder einem Werkzeug mittels eines fluiden Mediums, mit zumindest einer über das fluide Medium betriebenen Rotationsdüse, wobei die Rotationsdüse eine Anschlusskomponente zum Anschließen an eine das fluide Medium führenden Leitung und eine an der Anschlusskomponente relativ zur Längsachse der Rotationsdüse drehbar gelagerte Rotationskomponente aufweist. Der Rotationsdüse ist zumindest eine Arbeitsdüse zugeordnet; diese ist so angeordnet und/oder ausgestaltet ist, dass das fluide Medium auf das Werkstück und/oder das Werkzeug geleitet wird. Weiterhin ist zumindest eine Antriebsdüse vorgesehen, deren Austrittsöffnung für das fluide Medium mittels einer Fliehkraftreglereinheit selbsttätig derart vergrößert oder verkleinert wird, dass die Rotationsdüse mit einer vorgegebenen Drehzahl rotiert. Darüber hinaus ist eine Adaptereinheit vorgesehen, die so ausgestaltet ist, dass sie die Rotationsdüse mechanisch mit einer Montageeinheit verbindet. Zusätzlich ist eine der Adaptereinheit zugeordnete Leiterkarte über ein Bussystem elektrisch/elektronisch einer Steuer-/Auswerteeinheit verbindet. Mittels eines Drehzahlsensors wird insbesondere kontinuierlich die Drehzahl der Rotationsdüse ermittelt. Die ermittelte Drehzahl wird an eine Steuer-/Auswerteeinheit weitergeleitet, die eine Meldung generiert, wenn die von dem Drehzahlsensor übermittelte Drehzahl von der vorgegebenen Drehzahl der Rotationsdüse abweicht.

Eine Ausgestaltung des erfindungsgemäßen Systems sieht vor, dass mit der Rotationskomponente zumindest ein elektrisch leitendes Markierungselement gekoppelt ist, das pro Umdrehung der Rotationskomponente mit dem der Adaptereinheit zugeordneten Drehzahlsensor zumindest einmal induktiv koppelt und zumindest einen Puls erzeugt. Bevorzugt handelt es sich bei dem Markierungselement um eine ringförmige Komponente, die in zumindest einem Bereich eine über den Außendurchmesser des Gehäuses der Rotationskomponente hinausragende Ausstülpung oder Lasche aufweist. Diese wechselwirkt beim Rotieren induktiv mit dem Drehzahlsensor. Alternativ kann es sich bei dem elektrisch leitenden Markierungselement um eine intrinsische Komponente der Rotationsdüse handeln, z.B. um einen Arbeitsarm oder um einen Antriebsarm, also gleichfalls ein Element, das über den Außendurchmesser der Rotationsdüse übersteht.

Eine Ausgestaltung des erfindungsgemäßen Systems sieht vor, dass die ringförmige Komponente als separate Einheit ausgebildet. Diese ist so ausgestaltet, dass sie bei der Montage zwischen einer Endfläche der Rotationskomponente und der Adaptereinheit an der Rotationskomponente angebracht ist.

Bevorzugt weist das erfindungsgemäße System eine Vielzahl von Rotationsdüsen und zugeordneten Adaptereinheiten mit Drehzahlsensoren und Leiterkarten auf. Um die Drehzahl der Rotationsdüsen überwachen zu können und um Information zwischen den Rotationsdüsen und der Steuer-/Auswerteeinheit austauschen zu können, erfolgt die Kommunikation über ein in der Automatisierungstechnisch gebräuchliches Busprotokoll. Beispielsweise wird das CAN Busprotokoll zur Kommunikation verwendet.

Das erfindungsgemäße Verfahren zur Überwachung der Drehzahl der an der Montageeinheit angebrachten Rotationsdüsen sieht vor, dass die Steuer-Auswerteeinheit in einer Initialisierungsphase jeder Rotationsdüse bzw. jedem einer Rotationsdüse zugeordneten Drehzahlsensor eine eindeutige Identifikationsnummer / Kennung zuordnet. Infolge der eindeutigen Zuordnung kann eine sichere bilaterale Kommunikation zwischen der Steuer-/Auswerteeinheit und der den Rotationsdüsen zugeordneten Drehzahlsensoren erfolgen.

In einem weiteren Verfahrensschritt wird vorgeschlagen, dass der zumindest eine Drehzahlsensor über das Bussystem parametriert wird, wobei es sich bei den Parametern insbesondere um die Schaltschwelle, bei der ein Drehzahlsignal ausgelöst wird, um die Hysterese, die Anzahl der Markierungselemente, die der Rotationsdüse zugeordnet sind, und/oder die Zeitdauer einer Messperiode zur Ermittlung einer durchschnittlichen Drehzahl handelt. Sind die entsprechenden Parameter der Steuer-/Auswerteeinheit bekannt, so kann sie ihre Überwachungsaufgabe zuverlässig erfüllen. Insbesondere ist vorgesehen, dass eine Ermittlung einer optimierten Schaltschwelle und der Hysterese des zumindest einen Drehzahlsensors im Servicebetrieb erfolgt.

Weiterhin ist vorgesehen, dass zur Ermittlung der Schaltschwelle und der Hysterese insbesondere die folgenden Größen pro Umdrehung der Rotationsdüse ermittelt werden:
- Minimale induktive Messspannung des Drehzahlsensors,
- Maximale induktive Messspannung des Drehzahlsensors,
- Zeitpunkt des Einschaltens bei Annähern des Markierungselements an den Drehzahlsensors,
- Zeitpunkt des Ausschaltens bei Entfernen des Markierungselements von dem Drehzahlsensor.

Ein vorteilhafter Verfahrensschritt schlägt vor, die Anzahl der Umdrehungen und die für jede der Umdrehungen benötigte Zeitdauer der zumindest einen Rotationsdüse zu ermitteln und daraus die durchschnittliche aktuelle Drehzahl der Rotationsdüse zu errechnen. Diese Auswertung erfolgt bevorzugt auf der Leiterkarte, die dem Drehzahlsensor zugeordnet ist. Anschließend werden die ermittelten Drehzahlwerte von den Leiterkarten zu der Steuer-/Auswerteeinheit übertragen. Durch die reduzierte Kommunikation wird das Bussystem weniger stark belastet.

Um an den Rotationsdüsen plötzlich oder schleichend auftretende Fehlfunktionen zu erkennen, wird die ermittelte aktuelle Drehzahl mit der vorgegebenen Drehzahl der entsprechenden Rotationsdüse verglichen. Alternativ werden die Drehzahlen der Rotationsdüse, die während vorangegangener Messperioden ermittelt wurden, mit der vorgegebenen Drehzahl oder auch untereinander verglichen. Hierdurch werden schleichend auftretende Drehzahländerungen an jeder der Rotationsdüsen frühzeitig erkennbar, so dass geeignete Gegenmaßnahmen ergriffen werden können, bevor es zu einem Totalausfall der Rotationsdüse kommt.

Eine vorteilhafte Ausgestaltung des erfindungsgemäßen Verfahrens sieht vor, dass innerhalb der Messperiode eine minimale Drehzahl aus der Zeitdauer für die am längsten dauernde Umdrehung der zumindest einen Rotationsdüse ermittelt wird, dass innerhalb der Messperiode eine maximale Drehzahl aus der Zeitdauer für die am kürzesten dauernde Umdrehung der zumindest einen Rotationsdüse ermittelt wird, und dass eine Warnmeldung generiert wird, wenn die Schwankungen der Drehzahl der Rotationsdüse innerhalb einer Messperiode eine vorgegebene Toleranzgrenze überschreiten.

Weiterhin ist vorgesehen, dass die Temperatur in vorgegebenen Zeitintervallen oder kontinuierlich in der Umgebung der zumindest einen Rotationsdüse ermittelt wird. Dies macht es möglich, den Einfluss von Temperaturschwankungen zu berücksichtigen oder ggf. zu kompensieren.

Um das Bedienpersonal darüber zu informieren, dass eine Kommunikation auf dem Bussystem stattfindet oder dass alle Rotationsdüsen online sind, sind Leuchtmittel vorgesehen, die die Kommunikation visualisieren/signalisieren.

Weiterhin ist es möglich, die von der zumindest einen Rotationsdüse übermittelte Information und/oder die einer Rotationsdüse zugeordneten Parameter auf einer Anzeigeeinheit darzustellen. Das Bedienpersonal sieht dann auf einen Blick, in welchem Zustand sich das System bzw. die einzelnen Rotationsdüsen befinden.

Die Erfindung wird anhand der nachfolgenden Figuren näher erläutert. Es zeigt:
Fig. 1: eine schematische Darstellung einer Ausgestaltung des erfindungsgemäßen System zum Reinigen und/oder Trocknen von zumindest einem Werkstück und/oder einem Werkzeug mittels eines fluiden Mediums.
Fig. 2: eine perspektivische Ansicht einer ersten Ausgestaltung einer Rotationsdüse, die in dem erfindungsgemäßen System einsetzbar ist,
Fig. 3: eine perspektivische Ansicht einer zweiten Ausgestaltung einer Rotationsdüse, die in dem erfindungsgemäßen System einsetzbar ist,
Fig. 4: eine Explosionsdarstellung der Adaptereinheit,
Fig. 5: ein Flussdiagramm, das die Initialisierungsphase des erfindungsgemäßen Systems beschreibt, und
Fig. 6: ein Flussdiagramm, das die Überwachung der Rotationsdüsen des erfindungsgemäßen Systems im Messbetrieb beschreibt.

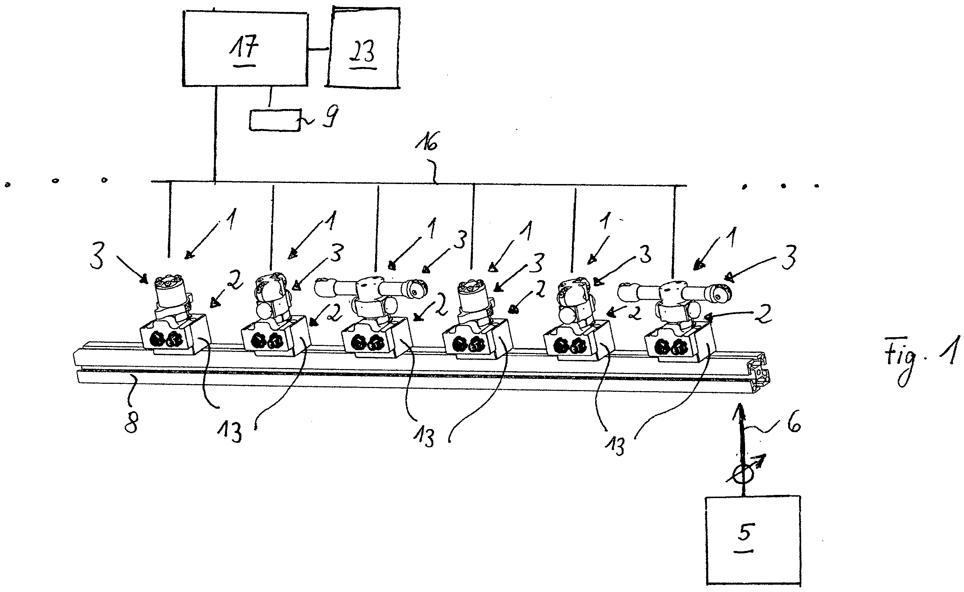

Fig. 1 zeigt eine schematische Darstellung einer Ausgestaltung des erfindungsgemäßen Systems zum Reinigen und/oder Trocknen von zumindest einem Werkstück und/oder einem Werkzeug mittels eines fluiden Mediums. Bei dem fluiden Medium handelt es sich im gezeigten Fall um Druckluft. Die Druckluft befindet sich in einem geeignet ausgestalteten Behälter 5. Es versteht sich von selbst, dass als fluides Medium - je nach Anwendungsfall - auch eine Flüssigkeit, z.B. eine Reinigungsflüssigkeit, eingesetzt werden kann. Die Werkstücke oder Werkzeuge sind in Fig. 1 nicht gesondert dargestellt.

Das System besteht aus mehreren ggf. unterschiedlich ausgestalteten Rotationsdüsen 1, die über eine Adaptereinheit 13 an einer Montageeinheit 8 angebracht sind. Wesentliche Bestandteile jeder Rotationsdüse 1 sind ein feststehender Grundköper 2 mit einem Anschluss zum Anschließen der Leitung 6 und einer Rotationskomponente 3, die drehbar um die Längsachse der Rotationsdüse 3 an dem Grundkörper 2 gelagert ist. Die Lagerung erfolgt üblicherweise über Kugellager, z.B. über zwei Miniatur Spindellager.

Die Druckluft strömt durch eine in der Rotationsdüse 1 verlaufende Durchführung (nicht dargestellt) zu zumindest einer Antriebsdüse 12 und zu zumindest einer Arbeitsdüse 11, die beide der Rotationskomponente 3 zugeordnet sind. Jede Arbeitsdüse 11 ist so ausgestaltet und angeordnet, dass das fluide Medium auf die Werkstücke oder Werkzeuge gerichtet ausströmt. Jeder Antriebsdüse 12 ist eine Fliehkraftregeleinheit (nicht gesondert dargestellt) zugeordnet. Diese stellt sicher, dass die Rotation der Rotationskomponente 3 der Rotationsdüse 1 mit einer vorgegebenen Drehzahl erfolgt. Die Fliehkraftregeleinheit ist bevorzugt so ausgestaltet, dass sie - je nach aktueller Drehzahl der Rotationskomponente 3 - die Austrittsöffnung der Antriebsdüse 12 für die Druckluft durch ein federnd gelagertes Gewicht selbsttätig vergrößert oder verkleinert, wodurch die Rotationskomponente 3 mit einer im Wesentlichen konstanten Drehzahl rotiert. Bevorzugt zeigen die Rotationsdüsen 1 einen im Wesentlichen symmetrischen Aufbau, wodurch das Auftreten von Unwuchten effektiv vermieden wird.

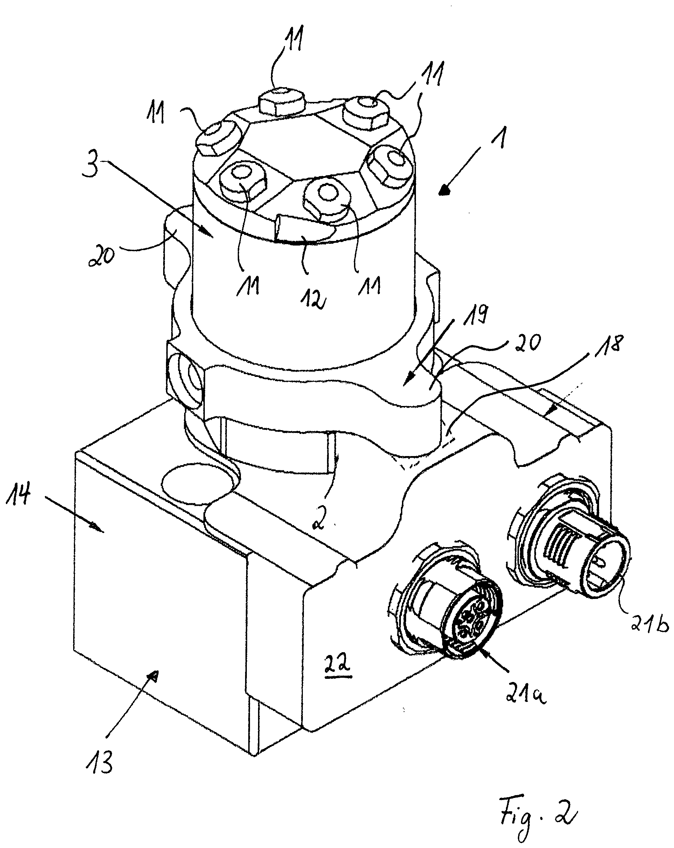

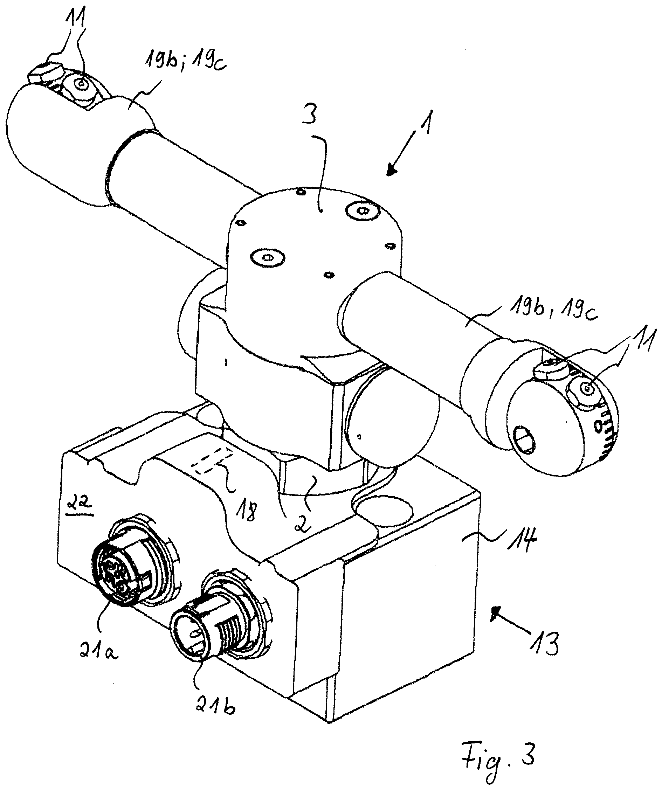

Zwei unterschiedliche Typen von Rotationsdüsen 1 werden bei der gezeigten Ausführungsform des erfindungsgemäßen Systems eingesetzt. In Fig. 2 ist eine zylinderförmige Rotationsdüse 1 zu sehen. Weitere Informationen zu diesem Typ sind der bereits zitierten DE 10 2017 009 773 A1 zu entnehmen. Fig. 3 zeigt eine Rotationsdüse 1 mit zwei kollinear angeordneten Armen, an denen die die Arbeitsdüsen 11 und Antriebsdüsen 12 angeordnet sind. Ausführliche Information zu diesem Typ von Rotationsdüse 1 ist der bereits zitierten DE 100 49 633 C2 zu entnehmen.

Jede Rotationsdüse 1 ist über eine Adaptereinheit 13 mit der Montageeinheit 8 mechanisch verbunden. Die Adaptereinheit 13 ist desweiteren mit einer Leiterkarte 15 mit elektrischen Steckerelementen 21 ausgestattet. Die Leiterkarte ist z.B. in die Wandung des Gehäuses 14 eingebettet. Über die Leiterkarte erfolgt die Anbindung an das Bussystem 16. Über das Bussystem 16 kommunizieren die Rotationsdüsen 1 untereinander, insbesondere aber mit der Steuer-/Auswerteeinheit 17; auch erfolgt die Energieversorgung der Komponenten 1, 17 über das Bussystem 16.

Jede Adaptereinheit 13 ist mit einem Drehzahlsensor 18 zur Ermittlung der Drehzahl der zugeordneten Rotationsdüse 1 versehen. Bei den Drehzahlsensoren18 handelt es sich bevorzugt um Sensoren, die auf dem induktiven Prinzip arbeiten. Hierbei ist in der Adaptereinheit 13 eine induktive Komponente 18 vorgesehen, die mit zumindest einem elektrisch leitenden Markierungselement 19, das fest mit der Rotationskomponente 3 verbunden ist, wechselwirkt.

Bei dem Markierungselement 19 handelt es sich beispielsweise um eine ringförmige Komponente 19a bzw. einen Düsenring 19a, der eine Ausstülpung bzw. einen Lasche 20 aufweist. Die ringförmige Komponente 19a ist mit der Rotationskomponenten 3 verbunden. Gleiches gilt für die Arbeitsarme 19b bzw. die Antriebsarme 19c, die über den Außendurchmesser der Rotationskomponente überstehen. Sobald die Lasche(n) / Ausstülpung(en) 20 oder der Arm / die Arme 19b, 19c in die Nähe des Drehzahlsensors 18 gelangt/gelangen, wird ein Puls bzw. werden mehrere Pulse pro Umdrehung erzeugt. Ist der Steuer-/Auswerteeinheit 17 bzw. der Vorortelektronik auf der Platine 15 des Drehzahlsensors 18 die Anzahl der Markierungselemente 19a; 19b; 19c, die pro Umdrehung mit dem Drehzahlsensor 18 wechselwirken, bekannt, so kann die Drehzahl der einzelnen Rotationsdüsen 1 bestimmt werden.

Bevorzugt ist die ringförmige Komponente 19a übrigens als separate Einheit ausgebildet, die so ausgestaltet ist, dass sie bei der Montage zwischen einer Endfläche der Rotationsdüse 1 und der Adaptereinheit 13 einbringbar ist. Die Adaptereinheit 13 bzw. das Gehäuse 14 der Adaptereinheit 13 erfüllt übrigens auch eine Dichtfunktion zwischen Rotationsdüse 1 und Montageeinheit 8.

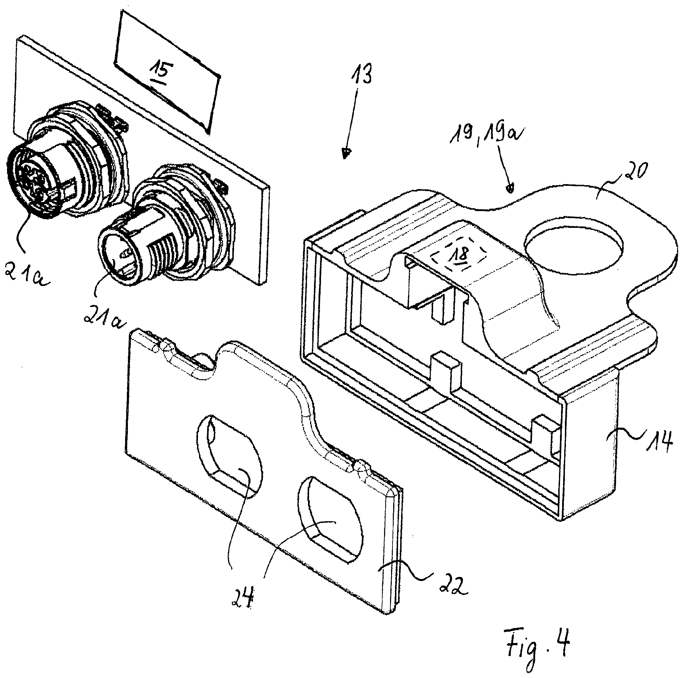

Die Adaptereinheit 13 mit integriertem Drehzahlsensor 18 und Leiterkarte 15 ist in der Explosionsdarstellung in Fig. 4 zu sehen. Das Gehäuse 14 und das Deckelelement 22 sind bevorzugt verklebt, so dass der Drehzahlsensor 18 auch an geltende Industrienormen angepasst ist.

Die Steuer-/Auswerteeinheit 17 generiert eine Meldung, sobald die von einem der "intelligenten" Drehzahlsensoren 18 übermittelte Drehzahl von der vorgegebenen Drehzahl der entsprechenden Rotationsdüse 1 abweicht. Auch ist es möglich, die von den Drehzahlsensoren 18 gelieferten Daten über ein Netzwerk an eine entfernte Anzeigeeinheit via HTML Protokoll weiterzuleiten. Die Anzeigeeinheit kann selbstverständlich auch einem Business Service Portal oder einem PC oder einem Handy zugeordnet sein. Auf der Anzeigeeinheit lassen sich die von den Rotationsdüsen 1 bzw. den Drehzahlsensoren 18 gelieferten Daten grafisch darstellen. Bevorzugt hat der Nutze mit einem Blick auf das Display alle relevanten Informationen verfügbar.

Die Kommunikation auf dem Bussystem 16 erfolgt über eines der in der Automatisierungstechnik gebräuchlichen Busprotokoll. So kann in Verbindung mit der Erfindung beispielsweise das CAN Busprotokoll eingesetzt werden. Über das Bussystem 16 - das Busprotokoll läuft auf einer verdrillten Zweidrahtleitung - tauschen die Drehzahlsensoren 18 der Rotationsdüsen 1 und die Steuer-Auswerteeinheit 17 gegenseitig Information aus. Da beim CAN-Bus (Controlled Area Network) sämtliche Daten über lediglich zwei Leitungen übertragen werden, lässt sich der Verkabelungsaufwand erheblich reduzieren, was sich in geringeren Kosten niederschlägt. Ein großer Vorteil der Nutzung eines Bussystems 17 ist weiterhin darin zu sehen, dass weitere Busteilnehmer bzw. Rotationsdüsen nachträglich eingefügt oder auch entfernt werden können: Es muss lediglich die Verbindung zur Busleitung hergestellt bzw. getrennt werden. Dieser Aspekt spielt besonders bei der Fehlersuche und Reparatur ein bedeutende Rolle. Fällt einer der Busteilnehmer aus irgendwelchen Gründen aus, so hat dies keine unmittelbaren Auswirkungen auf die Funktion des Systems. Alle funktionierenden Busteilnehmer können weiterhin uneingeschränkt kommunizieren.

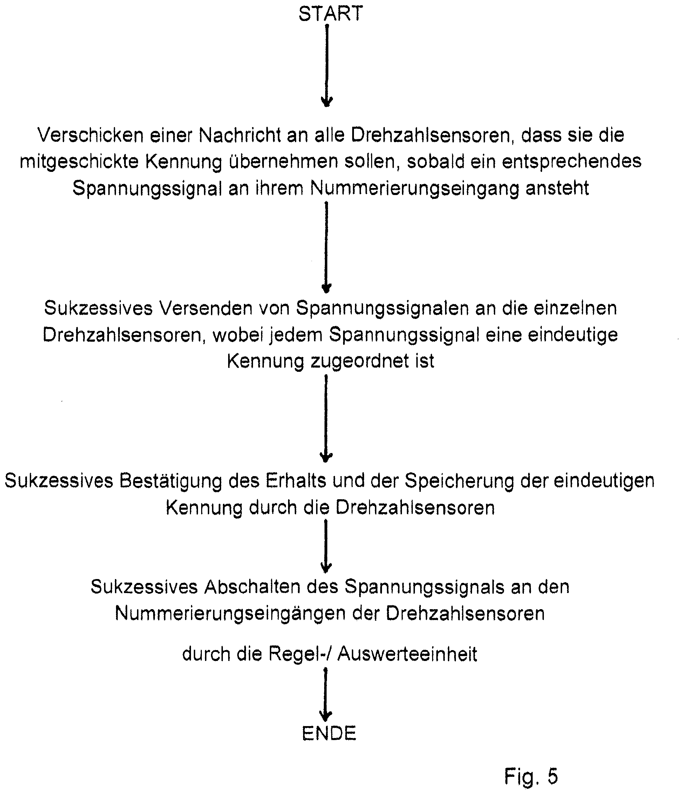

In Fig. 5 ist ein Flussdiagramm dargestellt, das die Initialisierungsphase des erfindungsgemäßen Systems beschreibt. Die Drehzahlsensoren 18 werden automatisch durchnummeriert. Nach dem Start schaltet die Steuer-/Auswerteeinheit 17 dem Drehzahlsensor 18, der als erster eine eindeutige Kennung erhalten soll, ein Spannungssignal auf den Nummerierungseingang. Im Fortgang gibt die Steuer-/Auswerteeinheit 17 entweder selbst das Spannungssignal auf den Eingang des nachfolgenden Drehzahlsensors 18, oder das Spannungssignal wird jeweils von dem zuvor nummerierten Drehzahlsensor 18 über das Bussystem 16 an den nächsten zu nummerierenden Drehzahlsensor 18 geleitet.

Die Regel-/Auswerteeinheit 17 verschickt eine Nachricht an alle Drehzahlsensoren 18, dass derjenige Drehzahlsensor 18, der ein Spannungssignal an seinem Nummerierungseingang hat, die mitgeschickte eindeutige Kennung / Nummer übernehmen soll. Sobald ein Drehzahlsensor 18 eine Nummer erhalten hat, meldet er sich mit einer Nachricht zurück, die bestätigt, dass er die Nummer übernommen und eingetragen hat. Die Steuer-/Auswerteeinheit verschickt in Folge eine Nachricht, um das Spannungssignal an dem Nummerierungseingang des nunmehr eindeutig gekennzeichneten Drehzahlsensors 18 abzuschalten.

Der zuvor beschriebene Nummerierungsvorgang wird solange fortgesetzt, bis alle Drehzahlsensoren 18 eine eindeutige Kennung, bevorzugt eine Nummer, erhalten haben. Der als letzter nummerierte Drehzahlsensor 18 einer Messlinie braucht einen Abschluss des CAN-Busses mit einem 120Ω Widerstand. Der Abschlussstecker, der diesen Widerstand enthält, bekommt auch einen Kurzschluss des Nummerierungsspannungsausgangs gegen Minus. Der Drehzahlsensor 18 kann den Kurzschluss erkennen.

Hierzu gibt die Steuer-/Auswerteeinheit 17 dem Drehzahlsensor 18, der zuletzt eine Nummer erhalten hat und der der letzte in der Messlinie ist, den Befehl, auf den Nummerierungseingang des in der Messlinie nachfolgenden Drehzahlsensors 18 ein Spannungssignal zu geben. Der Drehzahlsensor 18 erkennt, dass sein Ausgang kurzgeschlossen ist, und schickt der Steuer-/Auswerteeinheit 17 eine Nachricht, dass er der letzte Drehzahlsensor 18 in der Messlinie ist. Die Steuer-/Auswerteeinheit 17 schickt daraufhin eine Nachricht, um das Spannungssignal an dem Nummerierungseingang des letzten Drehzahlsensors 18 abzuschalten.

Weiterhin werden die einzelnen Drehzahlsensoren 18 über das Bussystem 17 parametriert. Diese Parametrierung ist immer dann wichtig, wenn die voreingestellten Standardwerte für die jeweilige Anwendung nicht ausreichend sind.

Über die Parametrierung der nachfolgend genannten Größen lässt sich die Messperformance der einzelnen Drehzahlsensoren 18 und damit auch des erfindungsgemäßen Systems optimieren - es versteht sich, dass die Auflistung nicht abschließend ist:
- die Schaltschwelle, ab der eine Annäherung des leitenden Markierungselements 19 an das induktive Sensorelement als anwesend bewertet wird;
- die Hysterese, bei der die Entfernung von leitendem Markierungselement 19 und induktivem Sensorelement ist so groß, dass die Bewertung: nicht mehr anwesend erfolgt.
- die Anzahl der pro Umdrehung wechselwirkenden Ausstülpungen 19a oder Arme 19b, 19c;
- die Dauer einer Messperiode

Als weitere Servicefunktion kann der Drehzahlsensor 18 mit einem Leuchtmittel, z.B. einer LED, den Schaltzustand für die Erkennung eines leitfähigen Materials anzeigen.

Folgendes Beispiel wird genannt:
Die induktive Messspannung eines Drehzahlsensors 18 wird in den Nachrichten, die auf dem Bussystem 17 übermittelt werden, als Punkte von 0 bis 4096 angezeigt. Die minimale Messspannung liegt bei etwa 500 bis 1000 Punkten und kann sich mit der Temperatur leicht ändern. Sowohl die Schaltschwelle als auch die Hysterese interpretiert ein Drehzahlsensor 18 in diesen Punkten. Die Schaltschwelle ist definiert als Abstand zur minimalen Messspannung. Übliche Werte sind - je nach Abstand zum rotierenden Markierungselement 19 - 30 bis 100 Punkte.

Die Hysterese ist der Wert zum Ausschalten des Erkennens des Markierungselements 19, um den die induktive Messspannung geringer sein muss als die Schaltschwelle zum Einschalten. Die Hysterese verhindert ein Prellen beim Einschalten. Die Werte liegen zwischen 10 und 50 Punkten.

Die Messperiode ist die Dauer zwischen zwei Nachrichten eines Drehzahlsensors 18, in denen die Drehzahl übermittelt wird. Der Drehzahlsensor 18 mittelt die Drehzahl über die Messperiode. Drehgeschwindigkeiten, die unter einer Umdrehung pro Messperiode liegen, gibt der Drehzahlsensor 18 als Null aus.

Das erfindungsgemäße System bzw. die einzelnen Drehzahlsensoren 18 kann / können darüber hinaus in einen Servicemode geschaltet werden. Hierzu schickt die Steuer-/Auswerteeinheit 17 an einen Drehzahlsensor 18 oder an alle Drehzahlsensoren 18 eine Nachricht und schaltet in dem Drehzahlsensor 18 bzw. in den Drehzahlsensoren 18 den Servicemode ein. Mittels des Servicemodes lassen sich Fehlfunktionen in einer Messlinie des CAN Buses erkennen.

Im Servicemode kann die Steuer-/Auswerteeinheit 17 die einzelnen Drehzahlsensoren18 auffordern, ihre Messspannungen zu schicken. Auf diese Aufforderung hin schicken die angesprochenen Drehzahlsensoren 18 die internen Spannungswerte an die Steuer-/Auswerteeinheit 17. Ebenso kann die Steuer-/Auswerteeinheit 17 die Drehzahlsensoren 18 auffordern, ihre Schaltzeitpunkte zu schicken; diese kennzeichnen jedes Annähern oder jedes Entfernen zwischen einem leitfähigem Markierungselement 19 und dem in der Adaptereinheit 13 integriertem Drehzahlsensor 18, das zu einem Schaltvorgang führt. Bevorzugt schickt der Drehzahlsensor 18 auf diese Aufforderung hin eine Nachricht, die die Zeit in Einheiten von 100µs seit dem Beginn der letzten Messperiode enthält.

Die Drehzahlsensoren 18 sind somit optimal auf das Material und/oder die Ausgestaltung/Form des Markierungselements 19, das/bei der jeweiligen Anwendung genutzt wird, einstellbar. Hierdurch ist eine prozesssichere Auswertung der zu überwachenden Rotationsdüsen 1 gewährleistet.

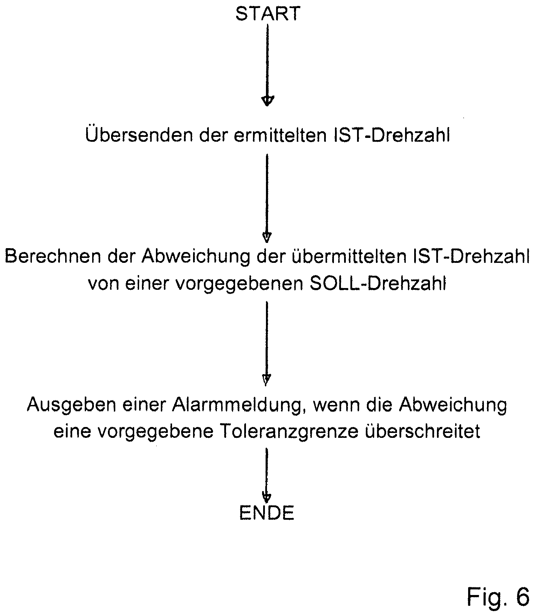

Fig. 6 zeigt ein Flussdiagramm, das die Überwachung der Rotationsdüsen 1 des erfindungsgemäßen Systems im Messbetrieb beschreibt. Nach dem Start des Programms schicken die Drehzahlsensoren 18 im Abstand der vorgegebenen Messperiode gemittelte Drehzahlwerte an die Steuer-/Auswerteeinheit 17. Die Steuer-/Auswerteeinheit 17 vergleicht die gemittelten IST-Drehzahlen mit der SOLL-Drehzahl bzw. den entsprechenden SOLL-Drehzahlen. Anschließend errechnet die Steuer-/Auswerteeinheit 17 jeweils die Abweichung der übermittelten IST-Drehzahl von einer vorgegebenen SOLL-Drehzahl. Überschreitet die Abweichung eine vorgegebene Toleranzgrenze, so wird eine Alarmmeldung generiert. Die Ausgabe erfolgt unmittelbar auf einer definierten Anzeigeeinheit, so dass das Bedienpersonal auftretende Fehlfunktionen zügig erkennen und beheben kann.

### Bezugszeichenliste

- 1: Rotationsdüse
- 2: Grundkörper mit Anschluss
- 3: Rotationskomponente
- 4 5: Behälter für fluides Medium
- 6: Leitung für fluides Medium
- 7 8: Montageeinheit
- 9: Eingabeeinheit
- 10: Rotationskomponente
- 11: Arbeitsdüse
- 12: Antriebsdüse
- 13: Adaptereinheit
- 14: Gehäuse
- 15: Leiterkarte / Platine
- 16: Bussystem
- 17: Steuer-/Auswerteeinheit
- 18: Drehzahlsensor
- 19: Markierungselement
- 19a: ringförmige Komponente / Düsenring
- 19b: Arbeitsarm
- 19c: Antriebsarm
- 20: Ausstülpung / Lasche
- 21a: Steckerelement Ausgang
- 21b: Steckerelement Eingang
- 22: Deckelelement
- 23: Display / Anzeigeeinheit
- 24: Ausnehmung

## Patentansprüche

1. System zum Reinigen und/oder Trocknen von zumindest einem Werkstück und/oder einem Werkzeug mittels eines fluiden Mediums mit zumindest einer über das fluide Medium betriebenen Rotationsdüse (1), wobei die Rotationsdüse (1) einen Grundkörper (2) mit einem Anschluss zum Anschließen einer das fluide Medium führenden Leitung (6) und eine an dem Grundkörper (2) relativ zur Längsachse der Rotationsdüse (1) drehbar gelagerte Rotationskomponente (3) aufweist, wobei der Rotationsdüse (1) zumindest eine Arbeitsdüse (11) zugeordnet ist, die so angeordnet und/oder ausgestaltet ist, dass das fluide Medium auf das Werkstück und/oder das Werkzeug geleitet wird, mit zumindest einer Antriebsdüse (12), deren Austrittsöffnung für das fluide Medium mittels einer Fliehkraftreglereinheit selbsttätig so vergrößert oder verkleinert wird, dass die Rotationsdüse (1) mit einer vorgegebenen Drehzahl rotiert, mit einer Adaptereinheit (13), die so ausgestaltet ist, dass sie die Rotationsdüse (1) mechanisch mit einer Montageeinheit (14) verbindet, **dadurch gekennzeichnet, dass** die Adaptereinheit so ausgestaltet ist, dass sie elektrisch/elektronisch eine der Adaptereinheit (13) zugeordnete Leiterkarte (15) über ein Bussystem (16) mit einer Steuer-/Auswerteeinheit (17) verbindet, wobei ein Drehzahlsensor (18) zur Ermittlung der Drehzahl der Rotationsdüse (1) vorgesehen ist und wobei die Steuer-/Auswerteeinheit (17) eine Meldung generiert, wenn die von dem Drehzahlsensor (18) übermittelte Drehzahl von der vorgegebenen Drehzahl der Rotationsdüse (1) abweicht.

2. System nach Anspruch 1,
wobei mit der Rotationskomponente (3) zumindest ein elektrisch leitendes Markierungselement (19) gekoppelt ist, das pro Umdrehung der Rotationsdüse (1) mit einem der Adaptereinheit (13) zugeordneten Drehzahlsensor (18), zumindest einmal induktiv koppelt und zumindest einen Puls erzeugt.

3. System nach Anspruch 2,
wobei es sich bei dem Markierungselement (19) um eine ringförmige Komponente (19a) handelt, die in zumindest einem Bereich eine über den Außendurchmesser des Gehäuses (20) der Rotationskomponente (3) hinausragende Ausstülpung (21) aufweist, die pro Umdrehung der Rotationsdüse (1) mit dem Drehzahlsensor (18) induktiv wechselwirkt.

4. System nach Anspruch 3,
wobei die ringförmige Komponente (19a) als separate Einheit ausgebildet ist, die so ausgestaltet ist, dass sie mit der Rotationskomponente (3) verbindbar ist.

5. System nach Anspruch 2,
wobei es sich bei dem zumindest einen Markierungselement (19) um eine intrinsische Komponente der Rotationskomponente (3) bzw. der Rotationsdüse (1), insbesondere um einen Arbeitsarm (19b) und/oder einen Antriebsarm (19c) handelt, der über den Außendurchmesser des Gehäuses (20) der Rotationskomponente (3) hinausragt.

6. System nach einem oder mehreren der vorhergehenden Ansprüche,
wobei eine Vielzahl von Rotationsdüsen (1) und zugeordneten Adaptereinheiten (13) mit Leiterkarten (15) vorgesehen sind, und wobei die Kommunikation auf dem Bussystem (16) über ein Busprotokoll, beispielsweise über das CAN Busprotokoll, erfolgt.

7. Verfahren zur Überwachung eines Systems zum Reinigen und/oder Trocknen von zumindest einem Werkstück und/oder einem Werkzeug, wie es in zumindest einem der Ansprüche 1-6 beschrieben ist,
wobei die Steuer-/Auswerteeinheit (17) in einer Initialisierungsphase jeder Rotationsdüse (3) bzw. jedem einer Rotationsdüse (3) zugeordneten Drehzahlsensor (18) eine eindeutige Identifikationsnummer zuordnet, so dass eine sichere bilaterale Kommunikation zwischen der Steuer-/Auswerteeinheit (17) und den Drehzahlsensoren (18) erfolgt.

8. Verfahren nach Anspruch 7,
wobei der zumindest eine Drehzahlsensor (18) über das Bussystem (16) parametriert wird, wobei es sich bei den Parametern insbesondere um die Schaltschwelle, bei der ein Drehzahlsignal ausgelöst wird, um die Hysterese, die Anzahl der Markierungselemente (19), die der Rotationsdüse (1) zugeordnet sind, und die Zeitdauer einer Messperiode zur Ermittlung einer durchschnittlichen Drehzahl handelt.

9. Verfahren nach Anspruch 8,
wobei eine optimierte Schaltschwelle und die Hysterese des zumindest einen Drehzahlsensors (18) im Servicebetrieb ermittelt werden.

10. Verfahren zumindest nach Anspruch 9,
wobei zur Ermittlung der Schaltschwelle und der Hysterese insbesondere die folgenden Größen pro Umdrehung der Rotationskomponente (3) ermittelt werden:
- Minimale induktive Messspannung des Drehzahlsensors (18),
- Maximale induktive Messspannung des Drehzahlsensors (18),
- Zeitpunkt des Einschaltens bei Annähern des Markierungselements (19) an den Drehzahlsensor (18),
- Zeitpunkt des Ausschaltens bei Entfernen des Markierungselements (19) von dem Drehzahlsensor (18).

11. Verfahren nach einem oder mehreren der Ansprüche 7-10,
wobei im Messbetrieb innerhalb der vorgegebenen Messperiode jeweils aus der die Anzahl der Umdrehungen und der für jede der Umdrehungen benötigte Zeitdauer der zumindest einen Rotationskomponenten (3) der Rotationsdüse (1) die durchschnittliche aktuelle Drehzahl errechnet und ausgegeben wird.

12. Verfahren nach einem oder mehreren der Ansprüche 7-11,
wobei die ermittelte aktuelle Drehzahl mit der vorgegebenen Drehzahl der Rotationsdüse (1) oder mit den Drehzahlen der Rotationsdüse (1), die während vorangegangener Messperioden ermittelt wurden, verglichen wird.

13. Verfahren nach einem oder mehreren der Ansprüche 7-12,
wobei innerhalb der Messperiode eine minimale Drehzahl aus der Zeitdauer für die am längsten dauernde Umdrehung der zumindest einen Rotationsdüse (1) ermittelt wird, und
wobei innerhalb der Messperiode eine maximale Drehzahl aus der Zeitdauer für die am kürzesten dauernde Umdrehung der zumindest einen Rotationsdüse (1) ermittelt wird, und
wobei eine Warnmeldung generiert wird, wenn die Schwankungen der Drehzahl der Rotationsdüse (1) innerhalb einer Messperiode eine vorgegebene Toleranzgrenze überschreiten.

14. Verfahren nach einem oder mehreren der Ansprüche 7-13,
wobei die Temperatur in vorgegebenen Zeitintervallen oder kontinuierlich in der Umgebung der zumindest einen Rotationsdüse (1) ermittelt wird.

15. Verfahren nach einem oder mehreren der Ansprüche 7-14,
wobei die Kommunikation zwischen der Steuer-/Auswerteeinheit (17) und der zumindest einen Rotationsdüse (1) über ein Leuchtmittel (LED) signalisiert wird.

## Claims

1. System for cleaning and/or drying at least one workpiece and/or a tool by means of a fluid medium with at least one rotary nozzle (1) operated via the fluid medium, wherein the rotary nozzle (1) has a base body (2) with a connection for connecting a line (6) carrying the fluid medium and a rotary component (3) mounted on the base body (2) so as to be rotatable relative to the longitudinal axis of the rotary nozzle (1), wherein at least one working nozzle (11) is associated with the rotary nozzle (1), which is arranged and/or designed in such a way that the fluid medium is directed onto the workpiece and/or the tool, with at least one drive nozzle (12), whose outlet opening for the fluid medium is automatically increased or reduced by means of a centrifugal force regulator unit so that the rotary nozzle (1) rotates at a predetermined rotational speed, with an adapter unit (13) which is designed in such a way that it mechanically connects the rotary nozzle (1) to an assembly unit (14), **characterised in that** the adapter unit is designed in such a way that it electrically/electronically connects a circuit board (15) assigned to the adapter unit (13) to a control/evaluation unit (17) via a bus system (16), wherein a rotational speed sensor (18) is provided for determining the rotational speed of the rotary nozzle (1) and wherein the control/evaluation unit (17) generates a message if the rotational speed transmitted by the rotational speed sensor (18) deviates from the predetermined rotational speed of the rotary nozzle (1).

2. System according to claim 1,
wherein at least one electrically conductive marking element (19) is coupled to the rotary component (3), which element couples inductively at least once per revolution of the rotary nozzle (1) to a rotational speed sensor (18) associated with the adapter unit (13) and generates at least one pulse.

3. System according to claim 2,
wherein the marking element (19) is an annular component (19a) which in at least one region has a protrusion (21) which projects beyond the outer diameter of the housing (20) of the rotary component (3) and which interacts inductively with the rotational speed sensor (18) per revolution of the rotary nozzle (1).

4. System according to claim 3,
wherein the annular component (19a) is designed as a separate unit which is configured in such a way that it is connectable to the rotational component (3).

5. System according to claim 2,
wherein the at least one marking element (19) is an intrinsic component of the rotary component (3) or the rotary nozzle (1), in particular a working arm (19b) and/or a drive arm (19c), which projects beyond the outer diameter of the housing (20) of the rotary component (3).

6. System according to one or more of the preceding claims,
wherein a plurality of rotary nozzles (1) and associated adapter units (13) with circuit boards (15) are provided, and wherein the communication on the bus system (16) takes place via a bus protocol, for example via the CAN bus protocol.

7. Method for monitoring a system for cleaning and/or drying at least one workpiece and/or a tool, as described in at least one of claims 1-6, wherein, in an initialisation phase, the control/evaluation unit (17) assigns a unique identification number to each rotary nozzle (3) or each rotational speed sensor (18) assigned to a rotary nozzle (3), so that secure bilateral communication takes place between the control/evaluation unit (17) and the speed sensors (18).

8. Method according to claim 7,
wherein the at least one rotational speed sensor (18) is parameterised via the bus system (16), wherein the parameters are, in particular, the switching threshold at which a speed signal is triggered, the hysteresis, the number of marking elements (19) assigned to the rotary nozzle (1) and the duration of a measuring period for determining an average rotational speed.

9. Method according to claim 8,
wherein an optimised switching threshold and the hysteresis of the at least one speed sensor (18) are determined in the service mode.

10. Method according to at least claim 9,
wherein, in order to determine the switching threshold and the hysteresis, the following variables per revolution of the rotational component (3) are determined in particular:
- minimum inductive measurement voltage of the rotational speed sensor (18),
- maximum inductive measurement voltage of the rotational speed sensor (18),
- time of switch-on when the marking element (19) approaches the rotational speed sensor (18), .
- time of switch-off when the marking element (19) is removed from the rotational speed sensor (18).

11. Method according to one or more of claims 7-10,
wherein in the measuring mode within the predetermined measuring period, the average current rotational speed is calculated and output from the number of revolutions and the time required for each of the revolutions of the at least one rotational component (3) of the rotary nozzle (1).

12. Method according to one or more of claims 7-11,
wherein the determined current rotational speed is compared with the predetermined rotational speed of the rotary nozzle (1) or with the rotational speeds of the rotary nozzle (1) determined during previous measuring periods.

13. Method according to one or more of claims 7-12,
wherein, within the measuring period, a minimum rotational speed is determined from the time duration for the longest lasting rotation of the at least one rotary nozzle (1), and
wherein a maximum rotational speed is determined within the measuring period from the time duration for the shortest lasting revolution of the at least one rotary nozzle (1), and
wherein a warning message is generated if the fluctuations in the rotational speed of the rotary nozzle (1) exceed a predetermined tolerance limit within a measurement period.

14. Method according to one or more of claims 7-13,
wherein the temperature is determined at predetermined time intervals or continuously in the environment of the at least one rotary nozzle (1).

15. Method according to one or more of claims 7-14,
wherein the communication between the control/evaluation unit (17) and the at least one rotary nozzle (1) is signalled via an illuminating means (LED).

## Revendications

1. Système pour le nettoyage et/ou le séchage d'au moins une pièce et/ou d'un outil au moyen d'un milieu fluide avec au moins une buse rotative (1) actionnée par le milieu fluide, la buse rotative (1) présentant un corps de base (2) avec un raccord pour le raccordement d'une conduite (6) guidant le milieu fluide et un composant rotatif (3) logé sur le corps de base (2) de manière rotative par rapport à l'axe longitudinal de la buse rotative (1), au moins une buse de travail (11) étant associée à la buse rotative (1), laquelle est disposée et/ou conçue de telle sorte que le milieu fluide est dirigé sur la pièce à usiner et/ou l'outil, avec au moins une buse d'entraînement (12), dont l'ouverture de sortie pour le fluide est automatiquement agrandie ou réduite au moyen d'une unité de régulation centrifuge de telle sorte que la buse rotative (1) tourne à une vitesse de rotation prédéfinie, avec une unité d'adaptation (13) qui est conçue de telle sorte qu'elle relie mécaniquement la buse rotative (1) à une unité de montage (14), **caractérisé en ce que** l'unité d'adaptation (13) est conçue de telle sorte qu'elle peut être connectée électriquement/ électroniquement à une carte de circuit imprimé (15) associée à l'unité d'adaptation (13) à une unité de commande/d'évaluation (17) par le biais d'un système de bus (16), un capteur de vitesse de rotation (18) étant prévu pour déterminer la vitesse de rotation de la buse rotative (1), et l'unité de commande/d'évaluation (17) générant un message lorsque la vitesse de rotation transmise par le capteur de vitesse de rotation (18) s'écarte de la vitesse de rotation prédéfinie de la buse rotative (1).

2. Système selon la revendication 1,
dans lequel au moins un élément de marquage électriquement conducteur (19) est couplé au composant rotatif (3), lequel élément de marquage est couplé par induction au moins une fois par rotation de la buse rotative (1) à un capteur de vitesse de rotation (18) associé à l'unité d'adaptation (13) et génère au moins une impulsion.

3. Système selon la revendication 2,
dans lequel l'élément de marquage (19) est un composant annulaire (19a) qui présente, dans au moins une zone, une protubérance (21) dépassant du diamètre extérieur du boîtier (20) du composant rotatif (3) et qui interagit de manière inductive avec le capteur de vitesse de rotation (18) pour chaque rotation de la buse rotative (1).

4. Système selon la revendication 3,
dans lequel le composant annulaire (19a) est conçu comme une unité séparée qui est configurée de manière à pouvoir être connecté au composant rotatif (3).

5. Système selon la revendication 2,
dans lequel l'au moins un élément de marquage (19) est un composant intrinsèque du composant rotatif (3) ou de la buse rotative (1), en particulier un bras de travail (19b) et/ou un bras d'entraînement (19c), qui dépasse du diamètre extérieur du boîtier (20) du composant rotatif (3).

6. Système selon une ou plusieurs des revendications précédentes,
dans lequel il est prévu une pluralité de buses rotatives (1) et d'unités d'adaptation associées (13) avec des cartes de circuit imprimé (15), et dans lequel la communication sur le système de bus (16) s'effectue via un protocole de bus, par exemple via le protocole de bus CAN.

7. Procédé de surveillance d'un système de nettoyage et/ou de séchage d'au moins une pièce et/ou d'un outil, tel que décrit dans au moins l'une des revendications 1 à 6,
dans une phase d'initialisation, l'unité de commande/évaluation (17) attribue un numéro d'identification unique à chaque buse rotative (3) ou à chaque capteur de vitesse de rotation (18) associé à une buse rotative (3), de sorte qu'une communication bilatérale sécurisée est établie entre l'unité de commande/évaluation (17) et les capteurs de vitesse de rotation (18).

8. Procédé selon la revendication 7,
dans lequel l'au moins un capteur de vitesse de rotation (18) est paramétré via le système de bus (16), les paramètres étant notamment le seuil de commutation à partir duquel un signal de vitesse de rotation est déclenché, l'hystérésis, le nombre d'éléments de marquage (19) associés à la buse rotative (1) et la durée d'une période de mesure pour déterminer une vitesse de rotation moyenne.

9. Procédé selon la revendication 8,
dans lequel un seuil de commutation optimisé et l'hystérésis du au moins un capteur de vitesse de rotation (18) sont déterminés en mode de service.

10. Procédé au moins selon la revendication 9,
dans lequel, pour déterminer le seuil de commutation et l'hystérésis, on détermine notamment les grandeurs suivantes par rotation du composant rotatif (3) :
- tension de mesure inductive minimale du capteur de vitesse de rotation (18),
- tension de mesure inductive maximale du capteur de vitesse de rotation (18),
- moment de la mise en marche lorsque l'élément de marquage (19) s'approche du capteur de vitesse (18),
- moment de la désactivation lorsque l'élément de marquage (19) s'éloigne du capteur de vitesse (18).

11. Procédé selon l'une ou plusieurs des revendications 7 à 10,
dans lequel, en mode de mesure, la vitesse de rotation actuelle moyenne est calculée et délivrée à l'intérieur de la période de mesure prédéfinie à partir du nombre de rotations et de la durée nécessaire pour chacune des rotations d'au moins un composant de rotation (3) de la buse rotative (1).

12. Procédé selon l'une ou plusieurs des revendications 7 à 11,
dans lequel la vitesse de rotation actuelle déterminée est comparée à la vitesse de rotation prédéfinie de la buse rotative (1) ou aux vitesses de rotation de la buse rotative (1) qui ont été déterminées pendant des périodes de mesure précédentes.

13. Procédé selon l'une ou plusieurs des revendications 7 à 12,
dans lequel, pendant la période de mesure, une vitesse de rotation minimale est déterminée à partir de la durée de la rotation la plus longue de la au moins une buse rotative (1), et
une vitesse de rotation maximale étant déterminée pendant la période de mesure à partir de la durée de la rotation la plus courte de la au moins une buse rotative (1), et
un message d'avertissement étant généré lorsque les variations de la vitesse de rotation de la buse rotative (1) à l'intérieur d'une période de mesure dépassent une limite de tolérance prédéfinie.

14. Procédé selon l'une ou plusieurs des revendications 7 à 13,
dans lequel la température est déterminée à des intervalles de temps prédéterminés ou en continu dans l'environnement de ladite au moins une buse rotative (1).

15. Procédé selon une ou plusieurs des revendications 7 à 14,
dans lequel la communication entre l'unité de commande/d'évaluation (17) et ladite au moins une buse rotative (1) est signalée par un moyen lumineux (LED).
